# EUROPEAN PATENT APPLICATION

(11) **EP 4 644 139 A1**
(43) Date of publication of application: **05.11.2025**
(21) Application number: 24173077.9
(22) Date of filing: 29.04.2024
(51) Int. Cl.: B60D 1/58, B60Q 1/24, B60Q 1/50, G06V 20/56, G08B 21/02, G08G 1/16

(54) **A HITCH AREA SURVEILLANCE SYSTEM**

(71) Applicant: Volvo Construction Equipment AB, 631 85 Eskilstuna (SE)
(72) Inventor: STRANDBERG, Gustav, 352 59 VÄXJÖ (SE); TIGER, Daniel, 360 51 HOVMANTORP (SE)
(74) Representative: Ström & Gulliksson AB

(57) **Abstract**

The present disclosure relates to a hitch area surveillance system for an articulated vehicle (100) having vehicle data, comprising a hitch area lighting system and/or sensor circuitry overlooking a hitch area of the articulated vehicle, a control unit (5) operatively connected with the articulated vehicle and the hitch area lighting system (2) and/or sensor circuitry (3), wherein the control unit (5) is configured to activate the hitch area lighting system (2) and/or sensor circuitry (3) based on received vehicle data.

## Description

### TECHNICAL FIELD

The disclosure relates generally to articulated vehicles. In particular aspects, the disclosure relates to a hitch area surveillance system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of articulated vehicles, such as articulated haulers and other machinery that involves operation of a vehicle and a trailer, the hitch area between the vehicle and the trailer has long been recognized as a hazardous zone. This area, due to the articulating motion of the machine, presents significant safety challenges not only to the operator but also to any individuals or obstacles in the vicinity. Prior art has attempted to address the safety concerns associated with the hitch area, but there remain notable deficiencies that compromise safety, particularly in low-speed or stationary scenarios where the perceived risk is paradoxically high.

One of the primary shortcomings of existing solutions is their passive nature. Conventional systems rely heavily on the operator's manual vigilance to monitor the hitch area. This approach is fraught with human error, as operators may become distracted, have obstructed views, or fail to anticipate the entry of persons into the hitch area, especially when the vehicle is idling or moving at low speeds. Such situations are commonplace in work sites where frequent interaction between personnel and machinery occurs.

### SUMMARY

According to a first aspect of the disclosure, a hitch area surveillance system for an articulated vehicle having vehicle data, comprising a hitch area lighting system and/or sensor circuitry overlooking a hitch area of the articulated vehicle, a control unit operatively connected with the articulated vehicle and the hitch area lighting system and/or sensor circuitry, wherein the control unit is configured to activate the hitch area lighting system and/or sensor circuitry based on received vehicle data. The first aspect of the disclosure may seek to solve the disadvantages with the prior solutions. A technical benefit may include improved visibility and detection of obstacles or personnel in the hitch area, thereby reducing the risk of accidents. In addition, an ability of the control unit to process real-time vehicle data to make intelligent decisions regarding the activation of the surveillance system is obtained. Moreover, the dynamic adaptation of the surveillance system to various operational and environmental conditions, ensuring optimal safety at all times.

Optionally in some examples, including in at least one preferred example, the vehicle data comprises engine data, motor data, vehicle velocity, articulation angle, transmission data, hydraulic data, and/or any combination thereof. A technical benefit may include the comprehensive monitoring of the vehicle's operational status to enhance the precision of the surveillance system's response.

Optionally in some examples, including in at least one preferred example, the control unit is configured to receive vehicle data from the articulated vehicle regarding at least the following modes of operation of the articulated vehicle:
forward travel of the articulated vehicle below a predetermined velocity,
reverse travel of the articulated vehicle below a predetermined velocity, articulation of the articulated vehicle,
the engine or motor is running without any movement of the articulated vehicle, and/or
a hydraulic system of the articulated vehicle is running,
whereby the control unit automatically activates the hitch area lighting system and/or sensor circuitry based on receiving these modes of operation. A technical benefit may include the automatic adjustment of the surveillance system to different operational conditions,
increasing safety during critical maneuvers.

Optionally in some examples, including in at least one preferred example, the sensor circuitry comprises one or more radar sensors, lidar sensors, Passive IR (PIR) detectors and/or optical sensor arrangement such as cameras or imaging modules, etc. A technical benefit may include the utilization of advanced sensor technologies for enhanced detection capabilities in the hitch area.

Optionally in some examples, including in at least one preferred example, based on data from the surveillance system, the control unit automatically detect presence of an individual within the hitch area. A technical benefit may include the proactive identification of potential hazards to prevent accidents before they occur.

Optionally in some examples, including in at least one preferred example, the control unit is configured to issue an indication to an operator of the articulated vehicle if an individual is detected within the hitch area. A technical benefit may include immediate operator awareness of safety breaches, allowing for quick and appropriate action.

Optionally in some examples, including in at least one preferred example, the sensor circuitry is arranged above, below and/or in level with the hitch area. A technical benefit may include versatile placement of sensors for optimal coverage and monitoring efficiency.

According to a second aspect of the disclosure, an articulated vehicle comprising a vehicle connected with a trailer via an articulation joint, the vehicle comprises a steering position for an operator, a hitch area around the articulation j oint, and a hitch area surveillance system as described above. The second aspect of the disclosure may seek to the disadvantages with the prior solutions. A technical benefit may include a fully integrated system that is designed to enhance the overall safety of the articulated vehicle.

Optionally in some examples, including in at least one preferred example, the vehicle has vehicle data, the vehicle data comprises engine data, motor data, vehicle velocity, articulation angle, transmission data, hydraulic data, and/or any combination thereof. A technical benefit may include the ability to leverage a wide array of vehicle data for informed surveillance system activation.

Optionally in some examples, including in at least one preferred example, the steering position is arranged at the center of the vehicle. A technical benefit may include improved operator visibility and ergonomics, contributing to safer vehicle operation.

Optionally in some examples, including in at least one preferred example, the articulation joint between the vehicle and the trailer is a permanent articulation joint. A technical benefit may include the stability and reliability of a permanent connection, reducing the risk associated with detachable components.

Optionally in some examples, including in at least one preferred example, the sensor circuitry is configured to overlooking the hitch area enabling detecting an individual in the hitch area from above, below, or any positions there between. A technical benefit may include a comprehensive surveillance range that minimizes blind spots in the hitch area and enhancing the safety.

According to a third aspect of the disclosure, a method for selectively controlling a hitch area surveillance system of any of the claims 1-7 of an articulated vehicle of any of the claims 8-12, comprising activating the hitch area lighting system and/or sensor circuitry based on received vehicle data. The third aspect of the disclosure may seek to the disadvantages with the prior solutions. A technical benefit may include tailored operation of the surveillance system to specific vehicle conditions, enhancing its effectiveness.

Optionally in some examples, including in at least one preferred example, further comprising
providing vehicle data to the control unit regarding at least the following modes of operation of the articulated vehicle:
forward travel of the articulated vehicle below a predetermined velocity,
reverse travel of the articulated vehicle below a predetermined velocity,
articulation of the articulated vehicle,
the engine or motor is running without any movement of the articulated vehicle, and/or a hydraulic system of the articulated vehicle is running,
activating automatically the hitch area lighting system and/or sensor circuitry based on receiving these modes of operation. A technical benefit may include the system's responsiveness to a variety of operational scenarios, thereby enhancing the adaptability of the surveillance system.

Optionally in some examples, including in at least one preferred example, further comprising automatically detecting presence of an individual within the hitch area based on data from the surveillance system. A technical benefit may include the system's autonomous capability to detect and respond to the presence of individuals, significantly increasing the safety of the hitch area.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary hitch area surveillance system according to an example.
**FIG. 2** shows an articulated vehicle according to an example.
**FIGS 3-4** show the articulated vehicle of **FIG. 2** in a top view.
**FIG. 5** shows an operator entering the articulated vehicle from the hitch area.
**FIG. 6** shows a flowchart of a method for selectively controlling a hitch area surveillance system according to an example.
**FIG. 7** is another view of **FIG. 1****,** according to an example.

### DETAILED DESCRIPTION

The detailed description set forth below provides information and examples of the disclosed technology with sufficient detail to enable those skilled in the art to practice the disclosure.

Moreover, previous methods and systems do not adequately address the dynamic and unpredictable environment in which articulated vehicles operate. The articulating motion can create blind spots that are not consistently mitigated by static safety measures. While some systems incorporate visual aids, like mirrors or cameras, these are often insufficient for providing comprehensive real-time information about the hitch area. Cameras may have limited fields of view and are subject to the same visibility issues as the operator, such as poor lighting conditions, while mirrors require the operator to constantly divide their attention between multiple visual feeds.

Another limitation of existing safety measures is the lack of integration with the vehicle's operational status. The activation of safety systems is typically manual, or at best, triggers under a limited set of predefined conditions, which may not account for all scenarios where potential hazards could arise. In many cases, the safety systems are not sensitive to changes in the vehicle's speed, steering angle, or other critical operational parameters that could indicate an increased risk in the hitch area.

Additionally, prior art does not provide a solution that adapts to varying ambient conditions, such as low light or adverse weather, which can significantly affect the visibility of the hitch area. In these circumstances, the risk of accidents or injuries is exacerbated, as operators may not be able to detect the presence of persons or obstacles with enough time to react safely.

In summary, while there have been efforts to increase the safety of the hitch area in articulated vehicles, there remains a pressing need for a more sophisticated approach that can dynamically respond to the vehicle's operation and environmental conditions. Such a solution would enhance the level of safety, particularly in scenarios where the risk is heightened due to low-speed operation, articulating movements, and the presence of personnel in proximity to the vehicle.

The present disclosure ensure the ability to increase visibility and safety within the hitch area through automated control, reducing the likelihood of accidents and injuries and especially during idle situation and during low speed. It is especially in idle situations and during low velocity both during forward and backwards travel and the shift there between that bystanders may approach the articulated vehicle in the hitch area without the operator noticing it. By the present disclosure the control unit of the surveillance system receives vehicle data from the articulated vehicle and on basis of the received vehicle data the control unit activates the hitch area lighting system and/or sensor circuitry overlooking a hitch area of the articulated vehicle so that the operator of the articulates vehicle receives assistance in enhancing the safety.

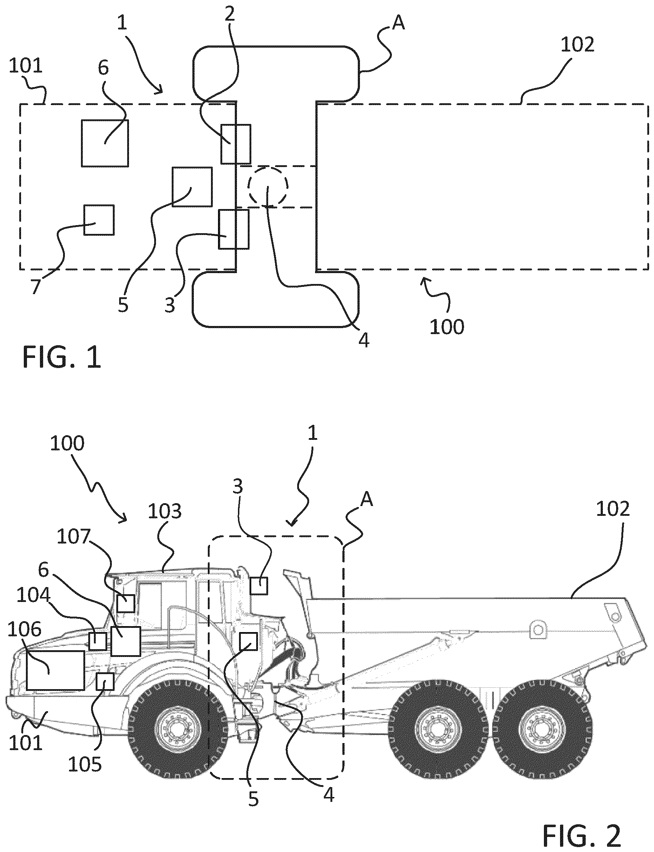

**FIG. 1** is an exemplary hitch area surveillance system **1** according to an example. The hitch area surveillance system **1** for an articulated vehicle **100** having vehicle data, comprising a hitch area lighting system **2** and/or sensor circuitry **3** overlooking a hitch area **A** of the articulated vehicle **100.** The hitch area **A** is defined as the area around the hitch connection **4,** i.e., on both sides of the hitch connection **4** as well as between the vehicle **101** and the trailer **102** providing the articulated vehicle **100.** The hitch area **A** is shown in **FIG. 1** as a bone-shaped area, however the hitch area **A** may also extend further out in a direction away from the articulated vehicle **100** and it may also extend further along the sides of either the vehicle **101** and/or the trailer **102.** The hitch area **A** is the risk zone of the articulated vehicle **100** where a bystander may enter unseen from the driver or operator of the articulated vehicle **100.** This is especially the case in circumstances where the articulated vehicle is large construction equipment where the visibility of the operator is limited in the risk zone.

The hitch area surveillance system **1** also comprises a control unit **5** operatively connected with the articulated vehicle **100** and the hitch area lighting system **2** and/or sensor circuitry **3.** The control unit **5** is configured to activate the hitch area lighting system **2** and/or sensor circuitry **3** based on received vehicle data. A technical advantage may include the ability to increase visibility and safety within the hitch area through automated control, reducing the likelihood of accidents and injuries.

The vehicle data may comprise engine data, motor data, vehicle velocity, articulation angle, transmission data, hydraulic data, and/or any combination thereof. According to the disclosure the control unit **5** activates the hitch area lighting system **2** and/or sensor circuitry **3** based on the received vehicle data. A technical advantage may include the system's ability to incorporate a wide range of vehicle operational data to determine when to activate the surveillance system, thus ensuring that lighting and sensors are deployed precisely when needed to support safety.

The control unit 5 may include a microprocessor, microcontroller, programmable digital signal processor or another programmable device. The control unit **5** may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The control unit **5** is configured to receive vehicle data from the articulated vehicle **100** regarding at least the following modes of operation of the articulated vehicle **100:**
- forward travel of the articulated vehicle **100** below a predetermined velocity,
- reverse travel of the articulated vehicle **100** below a predetermined velocity,
- articulation of the articulated vehicle **100,**
- the engine or motor is running without any movement of the articulated vehicle **100,** and/or
- a hydraulic system of the articulated vehicle **100** is running.

Hence, when the control unit **5** receives vehicle data indicating one or more of the modes of operation the control unit **5** automatically activates the hitch area lighting system **2** and/or sensor circuitry **3** based on receiving these modes of operation. A technical advantage may include the system's **1** proactive response to various operational modes that present increased risk in the hitch area, enhancing the safety protocol during critical vehicle maneuvers.

Furthermore, the sensor circuitry **3** may comprise one or more radar sensors, lidar sensors, Passive IR (PIR) detectors and/or optical sensor arrangement such as cameras or imaging modules, or the like. A technical advantage may include the employment of various sensor technologies to provide comprehensive monitoring and detection capabilities, which can adapt to different environmental conditions and detect a wide range of obstacles and/or persons. In addition, optical sensor arrangement may also be arranged for providing images or realtime videos of the hitch area **A** when the articulated vehicle **100** is operating within one or more of the preset modes of operation.

In addition, the control unit **5** may be configured to issue an indication to an operator of the articulated vehicle **100** if an individual is detected within the hitch area **A.** A technical advantage may include enabling the operator to receive immediate alerts about potential safety threats in the hitch area **A,** allowing for quick intervention to avoid harm. A display and/or an indication device 7 may be arranged. The display **6** and/or indication device 7 is/are arranged in a vicinity of an operator of the articulated vehicle **100.** A technical advantage may include providing the operator with a clear and accessible means to receive visual or other forms of alerts regarding the hitch area status, enhancing situational awareness.

The control unit **5** is operatively connected with the display **6** and/or indication device 7. A technical advantage may include the seamless integration between the control unit **5** and the operator's interface, allowing for immediate communication of surveillance data and alerts to the operator. According to the disclosure, the control unit **5** is configured to activate the display **6** and/or indication device **7** when detection of an individual is present within the hitch area **A.** A technical advantage may include the system's ability to alert the operator through various means such as visual displays, enhancing the operator's ability to react promptly to ensure safety within the hitch area.

Moreover, the indication may be a live video, an image, a light, a sound, a haptic feedback, or any combination thereof. A technical advantage may include providing the operator with multi-sensory alerts to ensure that the warning is noticed regardless of the operator's current focus or the noise environment within the vehicle cabin.

In another example, the hitch area lighting system **2** and/or sensor circuitry **3** is manually activated by the operator. A technical advantage may include giving the operator direct control over the surveillance system **1,** allowing for manual intervention in situations where the operator has additional context about the hitch area's safety or when the operator need the additional assistance in monitoring the risk zone of the hitch area even though when operating outside the predetermined modes of operation.

Also, based on data from the surveillance system, the control unit **5** automatically detects the presence of an individual within the hitch area **A.** A technical advantage may include the ability of the system to autonomously identify the presence of persons in the hitch area A and take pre-emptive safety measures to prevent potential accidents.

The control unit may also be configured to partly or fully limit operation of the articulated vehicle **100** if an individual is detected within the hitch area **A.** A technical advantage may include the system's capacity to intervene and control vehicle operations to prevent movements that could endanger individuals detected in the hitch area A.

In **FIG. 2****,** an articulated vehicle **100** is shown in a side view. In the example, the articulated vehicle **100** is a hauler having the vehicle **101** and the trailer **102.** The vehicle **101** is connected with the trailer **102** via a hitch connection **4** or an articulation joint **4.** The articulation joint **4** between the vehicle **101** and the trailer **102** may be a permanent articulation joint **4.** A technical advantage may include increased durability and reliability of the j oint, which can reduce maintenance needs and the risk of joint failure that could compromise hitch area safety. The hitch area **A** is indicated by a dotted line in **FIG. 2****.**

The sensor circuitry **3** may be arranged above, below and/or in level with the hitch area **A.** In **FIG. 2****,** the sensor circuitry **3** is arranged above the articulation joint **4.** A technical advantage may include strategic placement of sensors to optimize the detection field and reduce blind spots, ensuring that the system can detect individuals and obstacles in all relevant areas around the hitch.

In addition, a plurality of sensor circuitries **3** may be arranged for overlooking the hitch area **A,** or a plurality of sensors is arranged for overlooking the hitch area **A.** A technical advantage may include the utilization of multiple sensors to create a networked surveillance system that provides redundant coverage and accuracy in detecting hazards within the hitch area **A.**

The articulated vehicle **100** has vehicle data, the vehicle data may comprise engine data or motor data, vehicle velocity, articulation angle, transmission data, hydraulic data, and/or any combination thereof. A technical advantage may include the ability to utilize a broad spectrum of vehicle data to inform the surveillance system's activation, ensuring that environmental and operational factors are considered when assessing hitch area safety.

The vehicle **101** has a cabin **103** for the operator. In addition, a steering position is arranged at the center of the vehicle **101,** and in the present example inside the cabin **103.** In this situation the visibility of the hitch area **A** is very limited for the operator thereby making the hitch area **A** substantially a blind spot for the operator. Hence, in these situations the present disclosure is vital for enhancing the safety around the vehicle and especially in hitch area **A.**

The cabin **103** may have one or more C-post(s) or one or more frames. A technical advantage may include structural support for the cabin that can also serve as mounting points for the surveillance system's components, facilitating sensor and lighting placement in proximity to the hitch area **A.** The hitch area lighting system **2** and/or sensor circuitry 3 is/are arranged in connection with the cabin **103** and/or the C-post. A technical advantage may include the strategic integration of the surveillance system with the vehicle's cabin structure, ensuring that the system's components are both accessible for maintenance and positioned for optimal functionality.

The hitch area lighting system **2** may be arranged for illuminating the hitch area A. A technical advantage may include enhanced visibility in the hitch area during low-light conditions, which can significantly reduce the risk of accidents by making individuals and obstacles more visible to the operator.

In addition, the sensor circuitry **3** may be configured to overlooking the hitch area A enabling detecting an individual in the hitch area from above, below, or any positions there between. A technical advantage may include a versatile surveillance configuration that can detect the presence of individuals from a variety of angles, reducing the likelihood of undetected entry into the hitch area **A.**

The display **6** and/or indication device may be arranged in the cabin **103** visible for the operator. A technical advantage may include the immediate visibility of alerts and surveillance outputs to the operator, facilitating quick responses to any detected hazards in the hitch area.

The control unit **5** is configured to issue an indication to an operator of the articulated vehicle **100** if an individual is detected within the hitch area **A,** the indication is a live video, an image, a light, a sound, a haptic feedback, or any combination thereof. A technical advantage may include the multimodal notification capability of the system, allowing for alerts that can capture the operator's attention in various operational conditions and cater to different operator preferences.

The vehicle **101** may have a velocity sensor **104,** the velocity sensor **104** being operatively connected with the control unit **5.** A technical advantage may include the system's ability to use vehicle speed as a parameter for activating surveillance measures, which is particularly useful for dynamic safety management based on the vehicle's speed.

Moreover, the vehicle **101** may have an angular sensor **105** detecting an articulation of the vehicle **101,** the angular sensor **105** being operatively connected with the control unit **5.** A technical advantage may include the precise monitoring of the vehicle's articulation, allowing the surveillance system to activate based on specific articulation angles that may pose a higher risk in the hitch area.

The vehicle **101** has a motor **106** or an engine having motor data or engine data, the motor **106** or engine being operatively connected with the control unit **5.** A technical advantage may include the integration of motor or engine status into the surveillance system's operation, ensuring that the system is aware of the vehicle's operational status and can adjust its safety protocols accordingly. The motor may be an electric motor or the engine may be a combustion engine.

Furthermore, the cabin **103** may have an activation part **107,** the activation part **107** being configured to activate the hitch area surveillance system **1.** A technical advantage may include providing the operator with a dedicated control within the cabin to manually activate the surveillance system when needed, offering additional flexibility and control over the system's operation.

The vehicle **101** may further comprise a hydraulic steering pump. A technical advantage may include the enhanced control over the vehicle's steering provided by a hydraulic pump, which can be integral to the vehicle's overall maneuverability and thus indirectly contribute to the effectiveness of the hitch area surveillance system **1.** The vehicle data may include providing data about the hydraulic system is providing hydraulic pressure to the hydraulic steering pump.

As mentioned above, the vehicle **101** is a construction equipment, a hauler, a tractor, or similar heavy equipment.

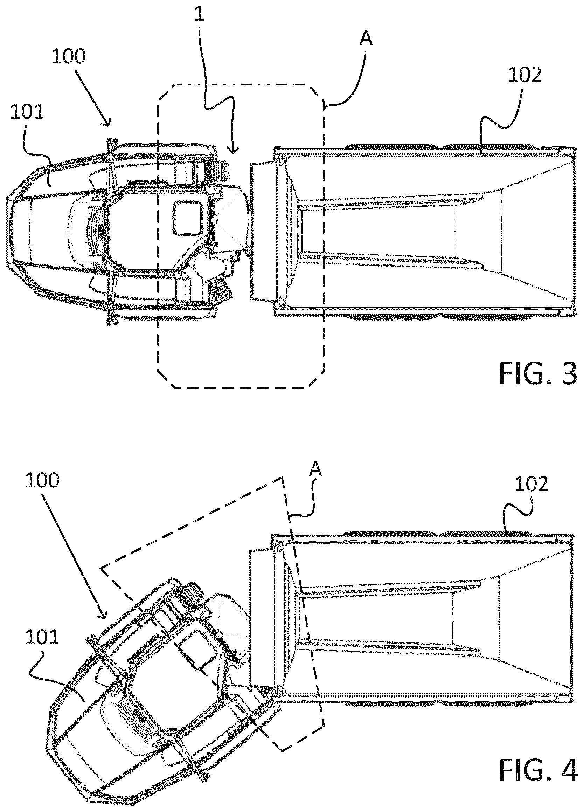

**FIGS 3-4** show in a top view the articulated vehicle **100** of **FIG. 2****.** In **FIG. 3****,** the vehicle **101** and the trailer **102** have no articulation between them. Hence, the hitch area **A** is shown as a dotted line. In **FIG. 4****,** the vehicle **101** has been articulated to the left in relation to the trailer **102** whereby the hitch area **A** between the vehicle and the trailer is minimized and if a bystander have entered into this area without being noticed by the operator, an accident may occur. However, by implementing the present disclosure this may be avoided.

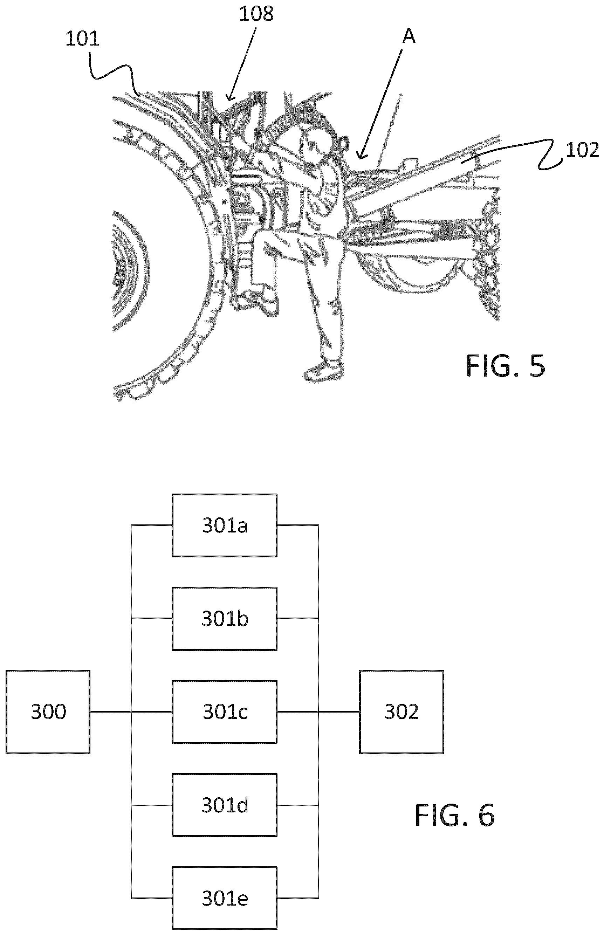

In **FIG. 5****,** a partial view of the hitch area **A** between the vehicle **101** and the trailer **102** is shown. The cabin has an entrance point **108** being opposite the hitch area **A.** In such a design a bystander may enter the vehicle **101** from the hitch area **A** without the operator notice this with a great risk. However, by the present disclosure this may be avoided.

The present disclosure also concern a method for selectively controlling a hitch area surveillance system **1** as described above, the method comprising activating the hitch area lighting system **2** and/or sensor circuitry **3** based on received vehicle data. A technical advantage may include the methodical operation of the surveillance system that can be tailored to specific vehicle data inputs, allowing for a safety system that is both responsive and adaptable to real-time operational conditions. In **FIG. 6****,** a flowchart of the method or selectively controlling a hitch area surveillance system **1.**

For instance, in step **300** vehicle data is provided to the control unit regarding at least the following modes of operation of the articulated vehicle:
- forward travel of the articulated vehicle below a predetermined velocity in step **301a,**
- reverse travel of the articulated vehicle below a predetermined velocity in step **301b,**
- articulation of the articulated vehicle in step **301c,**
- the engine or motor is running without any movement of the articulated vehicle in step **301d,** and/or
- a hydraulic system of the articulated vehicle is running in step **301e.** Based on receiving the modes of operation the hitch area lighting system **2** and/or sensor circuitry **3** are automatically activated in step **302.** A technical advantage may include the method's ability to trigger safety measures based on a diverse range of operational states, ensuring that the hitch area is protected during situations that are recognized as carrying higher risks.

The method may further comprising automatically detecting the presence of an individual within the hitch area **A** based on data from the surveillance system **1.** A technical advantage may include the method's capability to autonomously monitor the hitch area for the presence of individuals, potentially preventing accidents by alerting the operator or activating safety protocols before a risk escalates.

The method may further comprising issuing an indication to an operator of the articulated vehicle **100** if an individual is detected within the hitch area **A.** A technical advantage may include the method's provision for prompt notification to the operator when a person is detected in the hitch area, which can be vital for initiating immediate safety measures.

The method may also comprising that the indication is a live video, an image, a light, a sound, a haptic feedback, or any combination thereof. A technical advantage may include the method's flexibility to use various forms of alerts to effectively communicate with the operator, catering to different operational environments and personal alert preferences.

The method may further comprising limiting, partly or fully, operation of the articulated vehicle if an individual is detected within the hitch area. A technical advantage may include the method's ability to enforce safety protocols that can restrict vehicle operations under certain conditions, prioritizing the safety of individuals within the hitch area over the continuation of vehicle operation.

Also, the method may further comprising indicating on a display and/or an indication device when an individual is detected within the hitch area. A technical advantage may include the method's provision for clear and visible alerts on the operator's display or other indication devices, ensuring that the operator is well informed of the hitch area's status at all times.

The present disclosure also concern use of a hitch area surveillance system of any of the claims on an articulated vehicle, the articulated vehicle comprising a vehicle connected with a trailer via an articulation joint, the vehicle comprises a steering position for an operator, and a hitch area around the articulation joint. A technical advantage may include providing a use case for the surveillance system that is specifically tailored to the safety needs of articulated vehicles with hitch areas, ensuring that the system's benefits are maximized for this particular application.

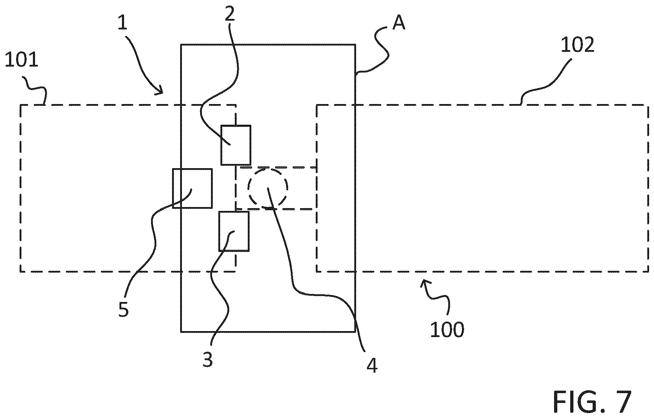

In **FIG. 7****,** another view of **FIG. 1****,** according to an example is shown. The hitch area surveillance system **1** for an articulated vehicle **100** having vehicle data is shown. The hitch area surveillance system **1** comprises a hitch area lighting system **2** and/or sensor circuitry overlooking **3** a hitch area **A** of the articulated vehicle and a control unit **5** operatively connected with the articulated vehicle **100** and the hitch area lighting system **2** and/or sensor circuitry **3.** According to the disclosure, the control unit **5** is configured to activate the hitch area lighting system **2** and/or sensor circuitry **3** based on received vehicle data.

Certain aspects and variants of the disclosure are set forth in the following examples numbered consecutive below.

Example 1: A hitch area surveillance system **(1)** for an articulated vehicle **(100)** having vehicle data, comprising
a hitch area lighting system **(2)** and/or sensor circuitry **(3)** overlooking a hitch area **(A)** of the articulated vehicle **(100),**
a control unit **(5)** operatively connected with the articulated vehicle **(100)** and the hitch area lighting system **(2)** and/or sensor circuitry **(3),**
wherein the control unit **(5)** is configured to activate the hitch area lighting system **(2)** and/or sensor circuitry **(3)** based on received vehicle data.

Example 2: The hitch area surveillance system **(1)** of example 1, wherein the vehicle data comprises engine data, motor data, vehicle velocity, articulation angle, transmission data, hydraulic data, and/or any combination thereof.

Example 3: The hitch area surveillance system **(1)** of any of the examples 1-2, wherein the control unit **(5)** is configured to receive vehicle data from the articulated vehicle **(100)** regarding at least the following modes of operation of the articulated vehicle **(100):**
- forward travel of the articulated vehicle **(100)** below a predetermined velocity,
- reverse travel of the articulated vehicle **(100)** below a predetermined velocity,
- articulation of the articulated vehicle **(100),**
- the engine or motor is running without any movement of the articulated vehicle **(100),** and/or
- a hydraulic system of the articulated vehicle **(100)** is running,
whereby the control unit **(5)** automatically activates the hitch area lighting system **(2)** and/or sensor circuitry **(3)** based on receiving these modes of operation.

Example 4: The hitch area surveillance system **(1)** of any of examples 1-3, wherein the sensor circuitry **(3)** comprises one or more radar sensors, lidar sensors, Passive IR (PIR) detectors and/or optical sensor arrangement such as cameras or imaging modules, etc.

Example 5: The hitch area surveillance system **(1)** of any of examples 1-4, wherein based on data from the surveillance system, the control unit **(5)** automatically detect presence of an individual within the hitch area **(A).**

Example 6: The hitch area surveillance system **(1)** of any of examples 1-5, wherein the control unit **(5)** is configured to issue an indication to an operator of the articulated vehicle if an individual is detected within the hitch area **(A).**

Example 7: The hitch area surveillance system **(1)** of any of examples 1-6, wherein the control unit **(5)** is configured to partly or fully limit operation of the articulated vehicle **(100)** if an individual is detected within the hitch area **(A).**

Example 8: The hitch area surveillance system **(1)** of any of examples 1-7, further comprising a display **(6)** and/or an indication device **(7),** the display **(6)** and/or indication device **(7)** is/are arranged in a vicinity of an operator of the articulated vehicle **(100).**

Example 9: The hitch area surveillance system **(1)** of example 8, wherein the control unit **(5)** is operatively connected with the display **(6)** and/or indication device **(7).**

Example 10: The hitch area surveillance system **(1)** of example 9, wherein the control unit **(5)** is configured to activate the display **(6)** and/or indication device **(7)** when detection of an individual is presence within the hitch area **(A).**

Example 11: The hitch area surveillance system **(1)** of any of examples 6-10, wherein the indication is a live video, an image, a light, a sound, a haptic feedback, or any combination thereof.

Example 12: The hitch area surveillance system **(1)** of any of the examples 1-11, wherein the hitch area lighting system **(2)** and/or sensor circuitry **(3)** is manually activated by the operator.

Example 13: The hitch area surveillance system **(1)** of any of the examples 1-12, wherein the hitch area **(A)** is defined as the area around the hitch connection **(4),** i.e. on both sides of the connection as well as between the vehicle **(101)** and the trailer **(102).**

Example 14: The hitch area surveillance system **(1)** of any of the examples 1-10, wherein the sensor circuitry **(3)** is arranged above, below and/or in level with the hitch area **(A).**

Example 15: The hitch area surveillance system **(1)** of any of examples 1-14, wherein a plurality of sensor circuitries **(3)** is arranged for overlooking the hitch area **(A),** or a plurality of sensors is arranged for overlooking the hitch area **(A).**

Example 16: An articulated vehicle **(100)** comprising
- a vehicle **(101)** connected with a trailer **(102)** via an articulation joint **(4),** the vehicle **(101)** comprises a steering position for an operator,
- a hitch area **(A)** around the articulation joint **(4),** and
- a hitch area surveillance system **(1)** of any of the examples 1-15.

Example 17: The articulated vehicle **(100)** of example 16, wherein the vehicle **(101)** has vehicle data, the vehicle data comprises engine data, motor data, vehicle velocity, articulation angle, transmission data, hydraulic data, and/or any combination thereof.

Example 18: The articulated vehicle **(100)** of any of the examples 16-17, wherein the steering position is arranged at the center of the vehicle **(101).**

Example 19: The articulated vehicle **(100)** of any of the examples 16-18, wherein the articulation joint **(4)** between the vehicle **(101)** and the trailer (102) is a permanent articulation joint **(4).**

Example 20: The articulated vehicle **(100)** of any of the examples 16-19, wherein the vehicle **(101)** has a cabin **(103)** for the operator.

Example 21: The articulated vehicle **(100)** of example 20, wherein the cabin **(103)** has one or more C-post(s) or one or more frames.

Example 22: The articulated vehicle **(100)** of any of the examples 20-21, wherein the hitch area lighting system **(2)** and/or sensor circuitry **(3)** is/are arranged in connection with the cabin **(103)** and/or the C-post.

Example 23: The articulated vehicle **(100)** of any of the examples 16-22, wherein the hitch area lighting system **(2)** is arranged for illuminating the hitch area **(A).**

Example 24: The articulated vehicle **(100)** of any of the examples 16-23, wherein the sensor circuitry **(3)** is configured to overlooking the hitch area **(A)** enabling detecting an individual in the hitch area **(A)** from above, below, or any positions there between.

Example 25: The articulated vehicle **(100)** of example 20, wherein the display **(6)** and/or indication device **(7)** is arranged in the cabin **(103)** visible for the operator.

Example 26: The articulated vehicle **(100)** of any of the examples 16-25, wherein the control unit **(5)** is configured to issue an indication to an operator of the articulated vehicle **(100)** if an individual is detected within the hitch area **(A),** the indication is a live video, an image, a light, a sound, a haptic feedback, or any combination thereof.

Example 27: The articulated vehicle **(100)** of any of the examples 16-26, wherein the vehicle **(101)** has a velocity sensor **(104),** the velocity sensor being operatively connected with the control unit **(5).**

Example 28: The articulated vehicle **(100)** of any of the examples 16-27, wherein the vehicle **(101)** has an angular sensor **(105)** detecting an articulation of the vehicle **(101),** the angular sensor being operatively connected with the control unit **(5).**

Example 29: The articulated vehicle **(100)** of any of the examples 16-28, wherein the vehicle **(101)** has a motor **(106)** or an engine having motor data or engine data, the motor or engine being operatively connected with the control unit **(5).**

Example 30: The articulated vehicle **(100)** of example 29, wherein the motor is an electric motor or the engine is a combustion engine.

Example 31: The articulated vehicle **(100)** of example 20, wherein the cabin **(103)** has an activation part **(107),** the activation part being configured to activate the hitch area surveillance system **(1).**

Example 32: The articulated vehicle **(100)** of any of the examples 16-31, wherein the vehicle **(101)** is a construction equipment, a hauler, a tractor, or similar.

Example 33: The articulated vehicle **(100)** of example 20, wherein the cabin **(103)** has an entrance point **(108)** being opposite the hitch area **(A).**

Example 34: The articulated vehicle **(100)** of any of the examples 16-33, further comprising a hydraulic steering pump.

Example 35: A method for selectively controlling a hitch area surveillance system (1) of any of the examples 1-15 of an articulated vehicle **(100)** of any of the examples 16-34, comprising activating the hitch area lighting system **(2)** and/or sensor circuitry **(3)** based on received vehicle data.

Example 36: The method of example 35, further comprising providing vehicle data to the control unit regarding at least the following modes of operation of the articulated vehicle:
forward travel of the articulated vehicle below a predetermined velocity,
reverse travel of the articulated vehicle below a predetermined velocity,
articulation of the articulated vehicle,
the engine or motor is running without any movement of the articulated vehicle, and/or
a hydraulic system of the articulated vehicle is running,
activating automatically the hitch area lighting system and/or sensor circuitry based on receiving these modes of operation.

Example 37: The method of any of the examples 35-36, further comprising automatically detecting presence of an individual within the hitch area **(A)** based on data from the surveillance system **(1).**

Example 38: The method of any of the examples 35-37, further comprising issuing an indication to an operator of the articulated vehicle **(100)** if an individual is detected within the hitch area **(A).**

Example 39: The method of examples 38, wherein the indication is a live video, an image, a light, a sound, a haptic feedback, or any combination thereof.

Example 40: The method of any of the examples 35-39, further comprising limiting, partly or fully, operation of the articulated vehicle **(100)** if an individual is detected within the hitch area **(A).**

Example 41: The method of any of the examples 35-40, further comprising indicating on a display **(6)** and/or an indication device **(7)** when an individual is detected within the hitch area.

Example 42: Use of a hitch area surveillance system **(1)** of any of the examples 1-15 on an articulated vehicle **(100),** the articulated vehicle **(100)** comprising a vehicle **(101)** connected with a trailer **(102)** via an articulation joint **(4),** the vehicle comprises a steering position for an operator, and a hitch area **(A)** around the articulation joint.

Example 43: The use of example 42, wherein the steering position is arranged at the center of the vehicle.

Example 44: The use of any of the examples 42-43, wherein the articulation joint **(4)** between the vehicle and the trailer is a permanent articulation joint **(4).**

Example 45: The use of any of the examples 42-44, wherein the vehicle **(101)** is a construction equipment, a hauler, a tractor, or similar.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A hitch area surveillance system **(1)** for an articulated vehicle **(100)** having vehicle data, comprising
a hitch area lighting system **(2)** and/or sensor circuitry **(3)** overlooking a hitch area **(A)** of the articulated vehicle,
a control unit **(5)** operatively connected with the articulated vehicle and the hitch area lighting system **(2)** and/or sensor circuitry **(3),**
wherein the control unit **(5)** is configured to activate the hitch area lighting system **(2)** and/or sensor circuitry **(3)** based on received vehicle data.

2. The hitch area surveillance system **(1)** of claim 1, wherein the vehicle data comprises engine data, motor data, vehicle velocity, articulation angle, transmission data, hydraulic data, and/or any combination thereof.

3. The hitch area surveillance system **(1)** of any of the claims 1-2, wherein the control unit **(5)** is configured to receive vehicle data from the articulated vehicle **(100)** regarding at least the following modes of operation of the articulated vehicle **(100):**
- forward travel of the articulated vehicle **(100)** below a predetermined velocity,
- reverse travel of the articulated vehicle **(100)** below a predetermined velocity,
- articulation of the articulated vehicle **(100),** and/or
- the engine or motor is running without any movement of the articulated vehicle **(100),**
- a hydraulic system of the articulated vehicle **(100)** is running,
whereby the control unit **(5)** automatically activates the hitch area lighting system **(2)** and/or sensor circuitry **(3)** based on receiving these modes of operation.

4. The hitch area surveillance system **(1)** of any of claims 1-3, wherein the sensor circuitry **(3)** comprises one or more radar sensors, lidar sensors, Passive IR (PIR) detectors and/or optical sensor arrangement such as cameras or imaging modules, etc.

5. The hitch area surveillance system **(1)** of any of claims 1-4, wherein based on data from the surveillance system **(1),** the control unit **(5)** automatically detect presence of an individual within the hitch area **(A).**

6. The hitch area surveillance system (1) of any of claims 1-5, wherein the control unit **(5)** is configured to issue an indication to an operator of the articulated vehicle **(100)** if an individual is detected within the hitch area **(A).**

7. The hitch area surveillance system **(1)** of any of the claims 1-6, wherein the sensor circuitry **(3)** is arranged above, below and/or in level with the hitch area **(A).**

8. An articulated vehicle **(100)** comprising
- a vehicle **(101)** connected with a trailer **(102)** via an articulation joint **(4),** the vehicle **(101)** comprises a steering position for an operator,
- a hitch area **(A)** around the articulation joint **(4),** and
- a hitch area surveillance system **(1)** of any of the claims 1-7.

9. The articulated vehicle **(100)** of claim 8, wherein the vehicle **(101)** has vehicle data, the vehicle data comprises engine data, motor data, vehicle velocity, articulation angle, transmission data, hydraulic data, and/or any combination thereof.

10. The articulated vehicle **(100)** of any of the claims 8-9, wherein the steering position is arranged at the center of the vehicle **(101).**

11. The articulated vehicle **(100)** of any of the claims 8-10, wherein the articulation joint **(4)** between the vehicle **(101)** and the trailer **(102)** is a permanent articulation joint **(4).**

12. The articulated vehicle **(100)** of any of the claims 8-11, wherein the sensor circuitry **(3)** is configured to overlooking the hitch area **(A)** enabling detecting an individual in the hitch area **(A)** from above, below, or any positions there between.

13. A method for selectively controlling a hitch area surveillance system **(1)** of any of the claims 1-7 of an articulated vehicle **(100)** of any of the claims 8-12, comprising activating the hitch area lighting system **(2)** and/or sensor circuitry **(3)** based on received vehicle data.

14. The method of claim 13, further comprising
providing vehicle data to the control unit **(5)** regarding at least the following modes of operation of the articulated vehicle **(100):**
- forward travel of the articulated vehicle **(100)** below a predetermined velocity,
- reverse travel of the articulated vehicle **(100)** below a predetermined velocity,
- articulation of the articulated vehicle **(100),** and/or
- the engine or motor is running without any movement of the articulated vehicle **(100),**
- a hydraulic system of the articulated vehicle **(100)** is running,
activating automatically the hitch area lighting system **(2)** and/or sensor circuitry **(3)** based on receiving these modes of operation.

15. The method of any of the claims 13-14, further comprising automatically detecting presence of an individual within the hitch area **(A)** based on data from the surveillance system **(1).**
